# EUROPEAN PATENT SPECIFICATION

(11) **EP 2 364 585 B1**
(45) Date of publication and mention of the grant of the patent: **14.11.2012**
(21) Application number: 11157508.0
(22) Date of filing: 09.03.2011
(51) Int. Cl.: A01D 34/64

(54) **Locking device for a blade clutch lever for a lawnmower**
Verriegelungsvorrichtung für einen Kupplungshebel für ein Rasenmäherschneideblatt
Dispositif de verrouillage pour levier d'embrayage de lame d'une tondeuse à gazon

(30) Priority: 12.03.2010 IT MI20100404
(43) Date of publication of application: 14.09.2011
(73) Proprietor: GGP Italy S.p.A., 31033 Castelfranco Veneto (TV) (IT)
(72) Inventor: Gazzola, Simone, 36022, Cassola VI (IT); Martini, Graziano, 31050, Vedelago TV (IT); Gambalonga, Leonardo, 35010 Massanzago (PD) (IT)
(74) Representative: Mittler, Enrico

(56) References cited:
- GB-A- 2 132 397
- US-A- 3 590 564
- US-A- 3 628 315
- US-A- 3 736 729

## Description

The present invention relates to a locking device for a blade clutch lever for a lawnmower.

Reference is made herein to lawnmowers of the type carrying a driver on a suitable chair-seat, and in particular to devices which allow linkages to be locked which connect the cutting blade of lawnmowers to the blade motor device.

These locking devices of the linkages connected to the cutting blade are very important for the safety of the lawnmower and, in particular, they are required as they keep the cutting blade disconnected from the blade motor device if the lawnmower is not being used, or more precisely when there is no driver on the chair-seat.

In particular, the blade is disconnected when the lawnmower overturns for any reason such as for example driving on excessive slopes, and the driver loses his/her position on the chair-seat and hence the control of the lawnmower and the related blade. Under these circumstances, the blade is to be stopped in the shortest time, and especially is to be immediately disconnected from its motor device.

Blade stopping devices with complex linkage devices exist in the known art, which are delicate in adjustment and in the successive operation. Moreover, pedal devices are often involved in which the operator is forced to hold said pedal pressed down for the entire duration of the blade operation.

US-3736729 discloses a locking and unlocking device for a blade clutch lever particularly for a lawnmower, said lawnmower comprising a frame and a chair-seat selectively positionable between a loaded chair-seat position and an unloaded chair-seat position. Said clutch lever is selectively movable in a seat, integral with the frame, between a first position of clutched blade and a second position of unclutched blade.

Considering the state of the art, it is hence the object of the present invention to resolve the aforesaid drawbacks by proposing a stopping device for a blade clutch lever which meets the conditions of being simple and fast to operate.

In accordance with the invention, such an object is achieved with a locking/unlocking device for a blade clutch lever particularly for a lawnmower, said lawnmower comprising a frame, a chair-seat selectively positionable between a loaded chair-seat position and an unloaded chair-seat position, said clutch lever selectively movable in a seat, integral with the frame, between a first position of clutched blade and a second position of unclutched blade, said device being characterized in that it comprises a hook-like element for directly locking the clutch lever selectively movable between a first engagement position and a second disengagement position of the clutch lever, control means associated with the hook-like element to place it in the engagement position of the clutch lever, the operation of said control means being associated with the positioning of said chair-seat, and contrast means of the control means for the positioning of the hook-like element in the second disengagement position of the clutch lever.

These and other features of the present invention will become more apparent from the following detailed description of one of its non-limiting practical illustrative embodiment disclosed in the accompanying drawings, in which:
figure 1 shows a side view of the device object of the invention, with raised chair-seat;
figure 2 shows a side view of the device object of the invention, with lowered chair-seat;
figure 3 shows a top view of figure 1;
figure 4 shows a top view of figure 2;
figure 5 shows a perspective view of an unclutched clutch lever;
figure 6 shows a perspective view of a clutched clutch lever.

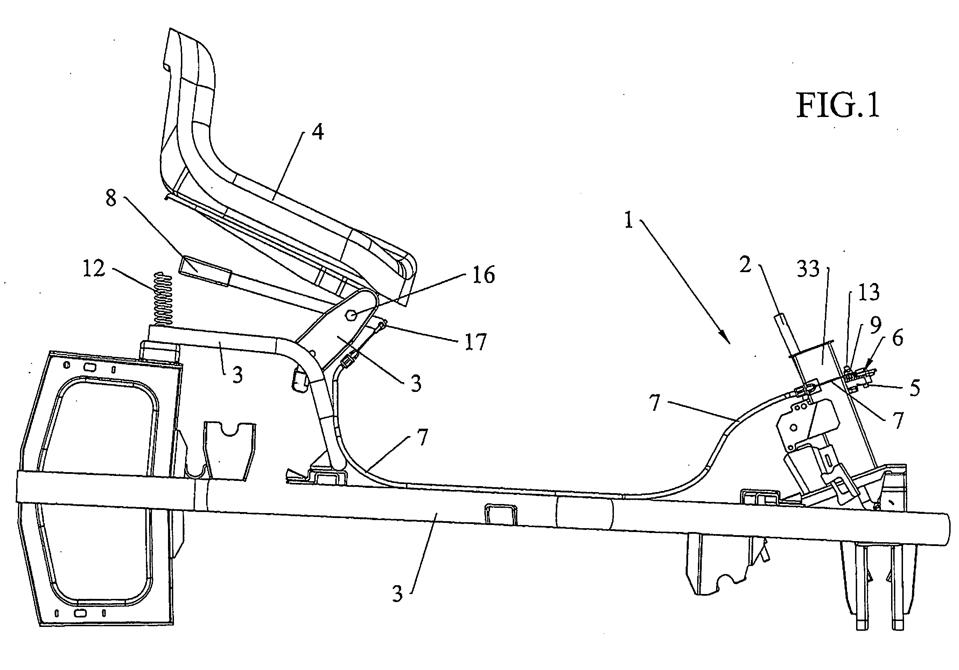

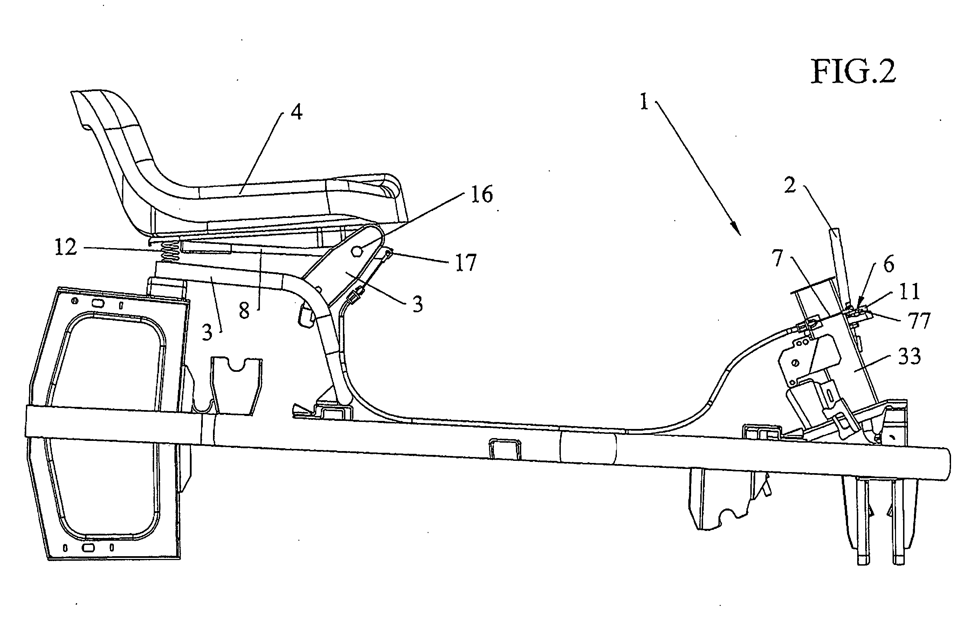

With reference to the accompanying figures, and in particular to figures 1, 3 and 5, a locking device 1 is shown for a blade (not represented) clutch lever 2 particularly for a lawnmower, also not represented. The clutch lever 2 is selectively movable in a seat 5, between a first position of clutched blade (figures 2, 4, 6) and a second position of unclutched blade (figures 1, 3, 5).

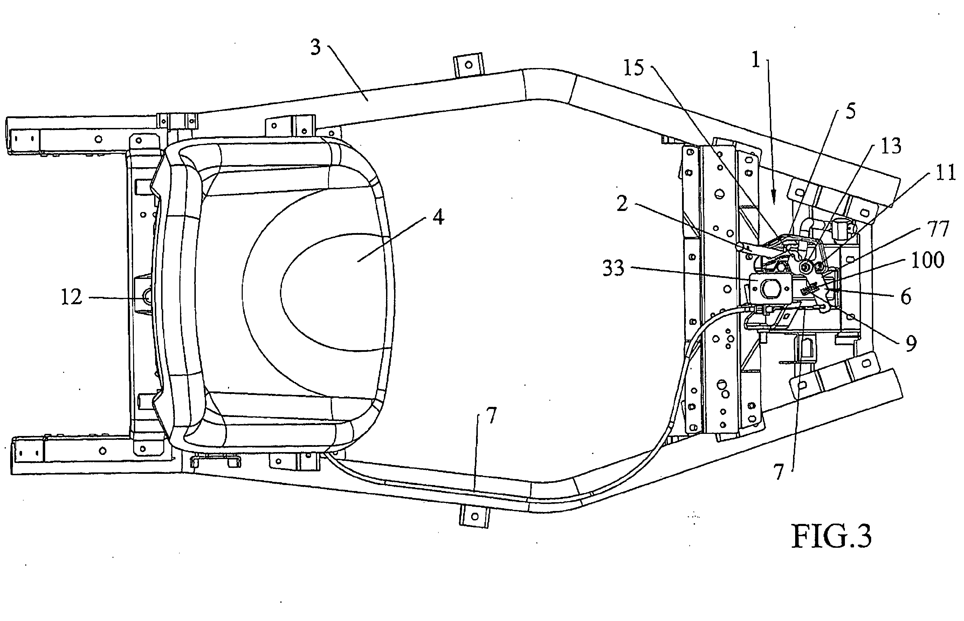

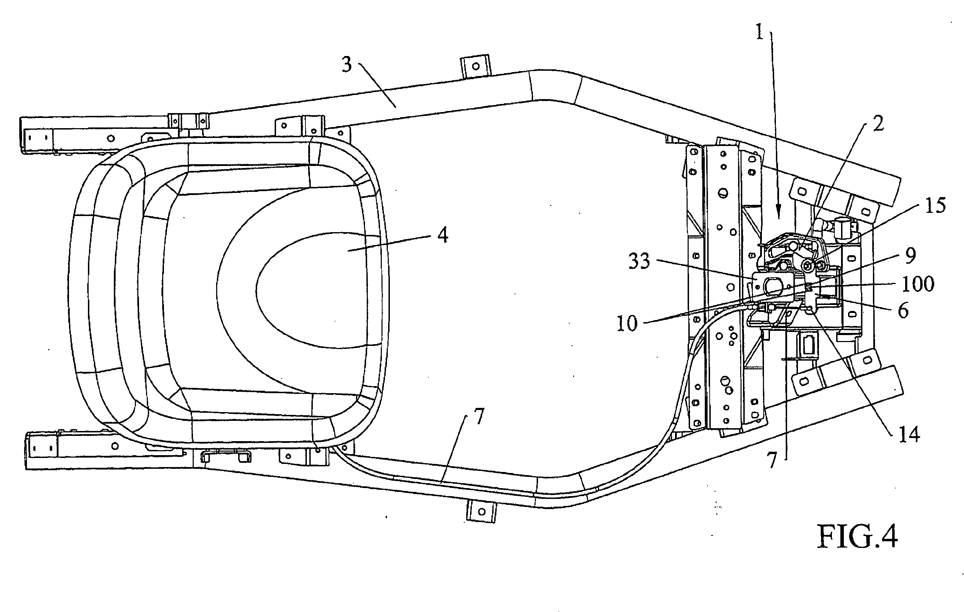

Said lawnmower comprises a frame 3, which is integral with seat 5, and a chair-seat 4 selectively positionable between a loaded chair-seat position (figures 2 and 4) and an unloaded chair-seat position (figures 1 and 3). Advantageously the positions are angular.

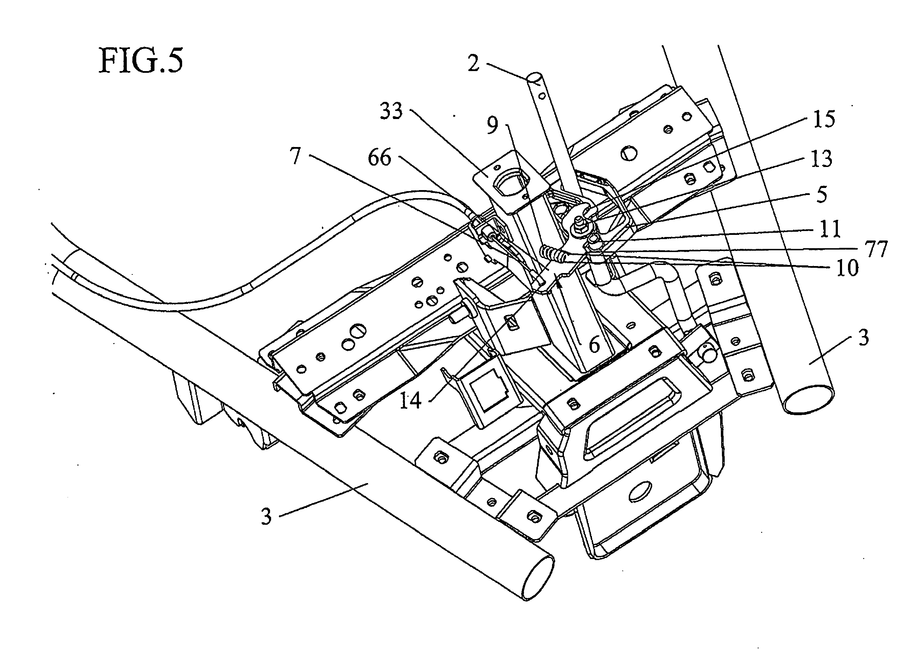

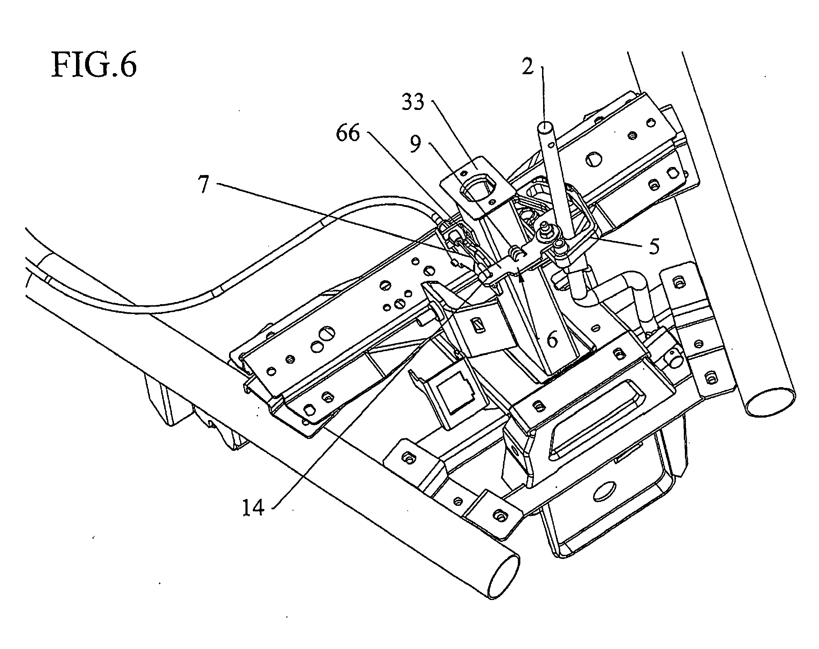

Device 1 also comprises a flat hook-like element 6 for directly stopping the clutch lever 2, which is selectively movable between a first engagement position (figures 4 and 6) and a second disengagement position of the clutch lever 2 (figures 3 and 5).

The flat element 6 is hinged to seat 5 with pivot 13 (figure 5) and is free to rotate there about. Seat 5 has a standstill 11 (figure 5) to limit the rotation of the flat element 6.

Device 1 also comprises control means 7, 8 associated with the flat element 6 to place it in the engagement position of the clutch lever 2, and contrast means 9 of the control means 7, 8 to position the flat element 6 in the second disengagement position of the clutch lever 2.

The operation of the control means 7, 8 is associated with the positioning of chair-seat 4 and they comprise a tension wire 7 and a control lever 8. Wire 7 is directly connected at one end 14 (figure 5) to the flat element 6 in such a way that pulling wire 7 causes the flat element 6 to rotate about pivot 13. A second end 17 of wire 7 is connected to the control lever 8.

The control lever 8 for the flat element 6 is hinged to frame 3 by a pivot 16 (figures 1 and 2), connected to wire 7 and arranged, with respect to chair-seat 4, so that it pulls wire 7 as chair-seat 4 lowers under the weight of the driver.

Advantageously the contrast means 9 comprise a contrast spring 9 which abuts on an upright 33 of frame 3 which embraces a pivot 100 of the flat element 6; said pivot 100 is placed in the intermediate zone of the flat element 6 to form two grooves 10 (figure 5). The pivot 100 is substantially flat, coplanar and one element with the flat element 6; it is also orthogonal to upright 33 so that spring 9 operates in said orthogonal direction to upright 33 so as to allow the rotation of the flat element 6 about pivot 13.

The flat element 6 is also equipped with a hook-like profile or hook 15 (figure 5) for holding the clutch lever 2.

Frame 3 is equipped with a cushioning and unloading spring 12 of chair-seat 4 when it is not occupied, said cushioning and unloading spring 12 being arranged thereunder.

The direct locking operation of the flat element 6 is the following: when chair-seat 4 is occupied and hence lowered, the control lever 8 is rotated downward from the chair-seat itself about pivot 16. In this way, it pulls wire 7 which causes the flat element 6 to rotate clockwise about pivot 13 so that hook 15 of the flat element 6 is pushed forward (with respect to the moving direction of the lawnmower) and locks the clutch lever 2 in the seat (figures 4 and 6). Spring 9 is compressed because following said clockwise rotation, pivot 100, which is a lodgement for spring 9, neared upright 33. The rotation of the flat element 6 occurs on an orthogonal plane to upright 33 and coplanar to plane 66 of the flat element 6.

When chair-seat 4 is not occupied, it is raised from the cushioning and unloading spring 12 and hence the pull of wire 7 is decreased so that the action of the return spring 9 prevails on the flat element 6, which, as it is abutting between upright 33 and the flat element 6, causes the flat element 6 to rotate counter-clockwise about pivot 13 so that hook 15 moves toward the back of the lawnmower and frees seat 5: the clutch lever 2 is no longer locked in the seat 5 (figures 3 and 5). The counter-clockwise rotation of the flat element stops because a projection 77 abuts on standstill 11.

The present invention permits to optimize the pulling action of wire 7 connected to the seat-chair: the flat element 6 is very thin and of limited dimensions and acts as direct intermediate connecting element between tension wire 7 and lever 2. As deduced by the figures, the mechanism is very "compact", well hinged to frame 3 by means of pivot 13 and quick to react to the variation of the pull of the wire due to the direct connection to upright 33 by means of a spring 9. Seat 5, substantially coplanar to the flat element 6, is restrained to the same upright 33.

The tension wire 7 acts in a coplanar direction to said plane 66 of the flat hook-like element 6 and is associated with upright 33 so that the operating direction coincides with the operating one of spring 9.

There are no drive bars with particular shapes or operating pedals.

## Claims

1. Locking and unlocking device (1) for a blade clutch lever (2) particularly for a lawnmower, said lawnmower comprising a frame (3), a chair-seat (4) selectively positionable between a loaded chair-seat position and an unloaded chair-seat position, said clutch lever (2) selectively movable in a seat (5), integral with the frame (3), between a first position of clutched blade and a second position of unclutched blade, said device (1) being **characterized by** the fact of comprising a hook-like element (6) for direct locking of the clutch lever (2) selectively movable between a first engagement position and a second disengagement position of the clutch lever (2), control means (7, 8) associated to the hook-like element (6) to place it in the engagement position of the clutch lever (2), operation of said control means (7, 8) being associated to the positioning of said chair-seat (4), and contrast means (9) of the control means (7, 8) to position the hook-like element (6) in the second disengagement position of the clutch lever (2).

2. Device (1) according to claim 1, **characterized in that** said hook-like element (6) is flat and is rotatably hinged (13) to the seat (5) with rotational axis orthogonal to the plane (66) to which said flat hook-like element (6) belongs in its turn substantially orthogonal to an upright (33) of the frame (3) to which the seat (5) is rigidly constrained and on which upright (33) a spring (9) abuts, associated to the hook-like element (6), contrasting the rotation induced by a tension wire (7).

3. Device according to claim 2, **characterized in that** said hook-like element (6) comprises at a first end a coupling (14) for a tension wire (7), at a second end a lock hook (15) for the lever (2), and at an intermediate position a lodgement (100) for the spring (9) in such a way it operates in an orthogonal direction in respect to the upright (33) that is it induces rotation of the flat element (6) about the pivot (13).

4. Device according to claim 3, **characterized in that** the tension wire (7) operates in a coplanar direction to said plane (66) of the hook-like flat element (6) and it is associated to the upright (33) in such a way said operating direction coincides with that of the operation of the spring (9).

5. Device (1) according to any one of the previous claims, **characterized in that** the flat hook-like element (6) provides a projection (77) suitable to abut on a standstill (11) of the seat (5) to limit the rotation.

## Patentansprüche

1. Verriegelungs- und Entriegelungsvorrichtung (1) für einen Klingenkupplungshebel (2), insbesondere für einen Rasenmäher, wobei der Rasenmäher einen Rahmen (3) aufweist, wobei ein Stuhlsitz (4) wahlweise zwischen einer Position eines gespannten Stuhlsitzes und einer Position eines entspannten Stuhlsitzes positionierbar ist, wobei der Kupplungshebel (2) in einem Sitz (5), der einstückig mit dem Rahmen (3) ist, wahlweise zwischen einer ersten Position einer gekuppelten Klinge und einer zweiten Position einer entkuppelten Klinge bewegbar ist, und die Vorrichtung (1) ist **gekennzeichnet durch** die Tatsache, dass sie ein hakenartiges Element (6) für ein direktes Verriegeln des Kupplungshebels (2), das wahlweise zwischen einer ersten Eingriffsposition und einer zweiten Entkoppelungsposition des Kupplungshebels (2) bewegbar ist, eine Steuereinrichtung (7, 8), die mit dem hakenartigen Element (6) verknüpft ist, um dieses in die Eingriffsposition des Kupplungshebels (2) zu versetzen, wobei ein Betrieb der Steuereinrichtung (7, 8) mit der Positionierung des Stuhlsitzes (4) verknüpft ist, und eine Gegeneinrichtung (9) der Steuereinrichtung (7, 8) aufweist, um das hakenartige Element (6) in die zweite Entkoppelungsposition des Kupplungshebels (2) zu positionieren.

2. Vorrichtung (1) gemäß Anspruch 1, **dadurch gekennzeichnet, dass** das hakenartige Element (6) eben ist und drehbar an den Sitz (5) gelenkt (13) ist, wobei eine Drehachse orthogonal zu der Ebene (66) ist, zu der das ebene, hakenartige Element (6) gehört, wobei seine Drehung im Wesentlichen orthogonal zu einer Säule (33) des Rahmens (3) ist, an dem der Sitz (5) starr befestigt ist, und an der Säule (33) eine Feder (9) anliegt, die mit dem hakenartigen Element (6) verknüpft ist, um entgegen der Drehung zu wirken, die durch einen Zugdraht (7) induziert wird.

3. Vorrichtung (1) gemäß Anspruch 2, **dadurch gekennzeichnet, dass** das hakenartige Element (6) an einem ersten Ende eine Koppelung (14) für einen Zugdraht (7), an einem zweiten Ende einen Verriegelungshaken (15) für den Hebel (2) und an einer Zwischenposition eine Aufnahme (100) für die Feder (9) derart aufweist, dass sie in einer orthogonalen Richtung hinsichtlich der Säule (33) wirkt, wodurch eine Drehung des ebenen Elements (6) um den Schwenkpunkt (13) induziert wird.

4. Vorrichtung gemäß Anspruch 3, **dadurch gekennzeichnet, dass** der Zugdraht (7) in einer koplanaren Richtung zu der Ebene (66) des hakenartigen ebenen Elements (6) wirkt und mit der Säule (33) derart verknüpft ist, dass die Arbeitsrichtung mit jener des Betriebs der Feder (9) übereinstimmt.

5. Vorrichtung (1) gemäß einem der vorherigen Ansprüche, **dadurch gekennzeichnet, dass** das ebene, hakenartige Element (6) einen Vorsprung (77) bereitstellt, der dazu geeignet ist, an einem Stopper (11) des Sitzes (5) anzuschlagen, um die Drehung zu begrenzen.

## Revendications

1. Dispositif de verrouillage et de déverrouillage (1) pour un levier d'embrayage de lame (2) en particulier pour une tondeuse à gazon, ladite tondeuse à gazon comprenant un châssis (3), un siège (4) pouvant être sélectivement positionné entre une position de siège chargée et une position de siège non chargée, ledit levier d'embrayage (2) étant sélectivement mobile dans un siège (5), solidaire du châssis (3), entre une première position de lame embrayée et une seconde position de lame débrayée, ledit dispositif (1) étant **caractérisé en ce qu'**il comprend un élément en forme de crochet (6) pour le verrouillage direct du levier d'embrayage (2) sélectivement mobile entre une première position de mise en prise et une seconde position de dégagement du levier d'embrayage (2), des moyens de commande (7, 8) associés à l'élément en forme de crochet (6) pour le placer dans la position de mise en prise du levier d'embrayage (2), le fonctionnement desdits moyens de commande (7, 8) étant associé au positionnement dudit siège (4), et des moyens de contraste (9) des moyens de commande (7, 8) pour positionner l'élément en forme de crochet (6) dans la seconde position de dégagement du levier d'embrayage (2).

2. Dispositif (1) selon la revendication 1, **caractérisé en ce que** ledit élément en forme de crochet (6) est plat et est articulé en rotation (13) par rapport au siège (5) avec un axe de rotation orthogonal au plan (66) auquel ledit élément en forme de crochet plat (6) appartient, à son tour sensiblement orthogonal par rapport à un montant (33) du châssis (3) auquel le siège (5) est rigidement contraint et sur lequel montant (33), un ressort (9) vient en butée, associé à l'élément en forme de crochet (6), s'opposant à la rotation induite par un fil de tension (7).

3. Dispositif selon la revendication 2, **caractérisé en ce que** ledit élément en forme de crochet (6) comprend, au niveau d'une première extrémité, un couplage (14) pour un fil de tension (7), au niveau d'une seconde extrémité, un crochet de verrouillage (15) pour le levier (2), et dans une position intermédiaire, un logement (100) pour le ressort (9) de sorte qu'il fonctionne dans une direction orthogonale par rapport au montant (33) qui induit la rotation de l'élément plat (6) autour du pivot (13).

4. Dispositif selon la revendication 3, **caractérisé en ce que** le fil de tension (7) fonctionne dans une direction coplanaire par rapport audit plan (66) de l'élément en forme de crochet plat (6) et est associé au montant (33) de sorte que ladite direction de commande coïncide avec celle du fonctionnement du ressort (9).

5. Dispositif (1) selon l'une quelconque des revendications précédentes, **caractérisé en ce que** l'élément en forme de crochet plat (6) fournit une saillie (77) appropriée pour venir en butée sur un encliquetage (11) du siège (5) pour limiter la rotation.
